# EUROPEAN PATENT SPECIFICATION

(11) **EP 2 151 095 B1**
(45) Date of publication and mention of the grant of the patent: **09.09.2015**
(21) Application number: 08765940.5
(22) Date of filing: 28.05.2008
(51) Int. Cl.: H04L 12/28, H04L 12/12, H04L 12/24, H04L 29/08

(54) **METHOD AND APPARATUS FOR DISCOVERING UNIVERSAL PLUG AND PLAY DEVICE USING RESOURCE INFORMATION**
VERFAHREN UND VORRICHTUNG ZUR ERKENNUNG VON UNIVERSELLEN PLUG-AND-PLAY-GERÄTEN MITTELS RESSOURCENINFORMATIONEN
PROCÉDÉ ET DISPOSITIF DE DÉCOUVERTE D'UN DISPOSITIF UNIVERSEL PRÊT À L'EMPLOI AU MOYEN D'INFORMATIONS DE RESSOURCE

(30) Priority: 31.05.2007 US 941067 P; 14.02.2008 KR 20080013489
(43) Date of publication of application: 10.02.2010
(73) Proprietor: Samsung Electronics Co., Ltd., Suwon-si, Gyeonggi-do, 443-742 (KR)
(72) Inventor: JUNG, Dong-Shin, Suwon-si Gyeonggi-do 441-718 (KR)
(74) Representative: Grünecker Patent- und Rechtsanwälte PartG mbB
(86) International application number: PCT/KR2008/002970
(87) International publication number: WO 2008/147099

(56) References cited:
- KR-A- 20070 042 001
- KR-A- 20070 042 001
- ZHAO W ET AL: "Enhancing Service Location Protocol for efficiency, scalability and advanced discovery", JOURNAL OF SYSTEMS & SOFTWARE, ELSEVIER NORTH HOLLAND, NEW YORK, NY, US, vol. 75, no. 1-2, 15 February 2005 (2005-02-15), pages 193-204, XP004650959, ISSN: 0164-1212, DOI: DOI:10.1016/J.JSS.2004.04.011
- ADRIAN FRIDAY ET AL: "Supporting Service Discovery, Querying and Interaction in Ubiquitous Computing Environments", WIRELESS NETWORKS ; THE JOURNAL OF MOBILE COMMUNICATION, COMPUTATION AND INFORMATION, KLUWER ACADEMIC PUBLISHERS, DO, vol. 10, no. 6, 1 November 2004 (2004-11-01), pages 631-641, XP019216710, ISSN: 1572-8196, DOI: DOI:10.1023/B:WINE.0000044024.54833.CB
- "UPNP DEVICE ARCHITECTURE 1.0 VERSION 1.0.1", UNIVERSAL PLUG AND PLAY (UPNP),, [Online] 2 December 2003 (2003-12-02), pages 1-73, XP008121804, Retrieved from the Internet: URL:http://hackipedia.org/Protocols/Intern et/UPnP/UPnP%20Device%20Archite cture%20v1.0.1%20Dec%202003.pdf>
- 'Universal Plug and Play (UPnP)' UPNP DEVICE ARCHITECTURE 1.0 VERSION 1.0.1 02 December 2003, pages 1 - 73, XP008121804
- MILLS K. AND DABROWSKI C.: 'Adaptive Jitter Control for UPnP M-Search' INTERNATIONAL CONFERENCE ON COMMUNICATIONS May 2003, pages 1008 - 1013, XP008123099

## Description

### Technical Field

Apparatus and method consistent with the present invention relate to a local area network, such as a home network, and more particularly, to discovering a Universal Plug and Play (UPnP) device in a UPnP network.

### Background Art

A home network is developed to provide an easy and convenient communicating method for apparatuses, such as informational electronics, wireless communication apparatuses, and PC related apparatuses, scattered in various places, and services. A UPnP device is one of various kinds of middleware for providing the home network. The UPnP device provides communication means, which easily connects various devices by using a standardized method that does not require operation of a manager or a user in a network environment without any specific manager such as at home or a small office, and means for allowing a user to use a service of a device connected through a network. In other words, regarding devices connected to a UPnP network, a device can notify another device about its functions and services, and allow the other device to control the functions and services. Also, when the other device does not use the functions and services, the other device can be easily removed from the UPnP network.

Under the UPnP environment, the devices connected to the UPnP network can be classified into a control device (hereinafter, referred to as a control point), which controls another device, and a controlled device (also referred to as a UPnP device), which is controlled by the control point. The UPnP network is a TCP/IP based network, and thus uses a conventional TCP/IP communication protocol. Accordingly, when a UPnP device connects to the UPnP network for the first time, the UPnP device is assigned an IP address. Then, a user has to perform a discovery process so as to control the controlled device connected to the UPnP network by using the control point. In other words, the control point discovers a required UPnP device, i.e. a controlled device, by searching for UPnP devices connected to the UPnP network in regards to device types or service types of the UPnP devices. Accordingly, a method of quickly and efficiently searching for a UPnP device that is suitable to a user's purpose while performing such a discovery process is required.

From Zhao et al. (ZHAO W ET AL: "Enhancing Service Location Protocol for efficiency, scalability and advanced discovery", JOURNAL OF SYSTEMS & SOFTWARE, ELSEVIER NORTH HOLLAND, NEW YORK, NY, US, vol. 75, no. 1-2, 2005, pages 193-204) new mechanisms for the Service Location Protocol are known, namely mesh enhancement, preference filters and global attributes.

Friday et al. (ADRIAN FRIDAY ET AL: "Supporting Service Discovery, Querying and Interaction in Ubiquitous Computing Environments", WIRELESS NETWORKS; THE JOURNAL OF MOBILE COMMUNICATION, COMPUTATION AND INFORMATION, KLUWER ACADEMIC PUBLISHERS, vol. 10, no. 6, 2004, pages 631-641) discloses using a set of short ubiquitous computing scenarios several key limitations of existing service discovery approaches that reduce their ability to support ubiquitous computing applications. A detailed analysis of requirements for providing effective support in this domain is presented.

From KR 2007-0042001 a method for acquiring UPNP device/service state information is known.

### Disclosure of Invention

### Technical Solution

One or more exemplary embodiments of the present invention provide a method, medium and apparatus for discovering a UPnP device, which can avoid trial and error with regard to a search and control while discovering the UPnP device, and overcome efficiency deterioration of a communication protocol by preventing unnecessary waste of resources, such as network traffic.

### Advantageous Effects

According to exemplary embodiments of the present invention, available resource in formation of UPnP devices connected to a UPnP network can be obtained in a discovery process, and as a result, trial and error while searching for and controlling the UPnP devices can be avoided and unnecessary waste of resources, such as network traffic, can be avoided. Accordingly, efficiency of a communication protocol is improved.

### Description of Drawings

The above and other aspects of the present invention will become more apparent by describing in detail exemplary embodiments thereof with reference to the attached drawings in which:
FIG. 1 is a diagram illustrating an environment in which exemplary embodiments of the present invention are realized;
FIG. 2 is a diagram illustrating a problematic situation that is to be solved by various embodiments of the present invention;
FIG. 3A is a diagram for describing a method of discovering a UPnP device by using a search message including resource request information according to an exemplary embodiment of the present invention;
FIG. 3B is a diagram for describing a method of discovering a UPnP device by using an advertisement message including resource information;
FIG. 3C is a diagram for describing a method of checking a resource of a UPnP device by invoking an action for requesting resource information;
FIG. 4 is a block diagram illustrating an apparatus for discovering a UPnP device according to an exemplary embodiment of the present invention;
FIG. 5A is a flowchart illustrating processes of discovering a UPnP device by using a search message including resource request information according to an exemplary embodiment of the present invention;
FIG. 5B is a flowchart illustrating processes of discovering a UPnP device by using an advertisement message including resourcé information;
FIG. 6 is a block diagram illustrating an apparatus for performing a discovery process in a UPnP device according to an exemplary embodiment of the present invention;
FIG. 7 A is a flowchart illustrating a method of processing a search message received in a UPnP device according to an exemplary embodiment of the present invention;
FIG. 7B is a flowchart illustrating a method of transmitting an advertisement message including resource information from a UPnP device;
FIG. 8A is a diagram illustrating a search message including resource request information according to an exemplary embodiment of the present invention; and
FIG. 8B is a diagram illustrating an advertisement message including resource information.

### Best Mode

According to an aspect of the present invention, there is provided a method of discovering a device with a variable resource complying with a predetermined standard according to claim 1.

Preferred embodiments are subject of the dependent claims.

According to another aspect of the present invention, there is provided a method for a device complying with a predetermined standard to perform a discovery process according to claim 4.

Preferred embodiments are subject of the dependent claims.

### Mode for Invention

Hereinafter, the present invention will be described more fully with reference to the accompanying drawings, in which exemplary embodiments of the invention are shown. The following exemplary embodiments are described assuming that a middleware platform realizing a home network is a UPnP, but it is obvious to one of ordinary skill in the art that various home network middleware platforms can be applied.

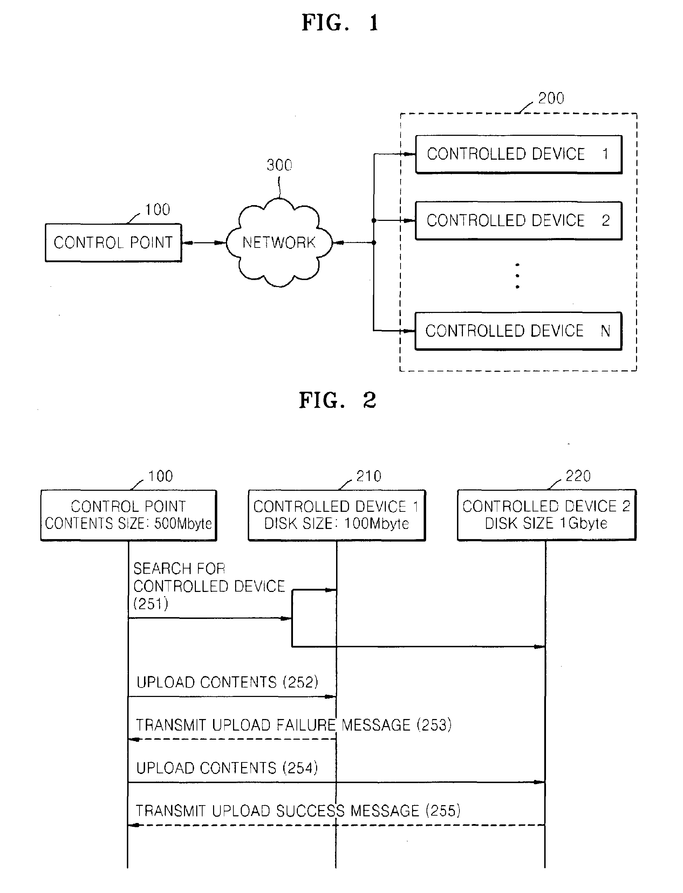

FIG. 1 is a diagram illustrating an environment in which exemplary embodiments of the present invention are realized. Referring to FIG. 1, the environment includes at least one control point 100 and at least one controlled device 200. For convenience of description, one control point 100 and N controlled devices 200 are illustrated. A network 300 connects the control point 100 and the controlled devices 200. Here, assuming that the control point 100 and the controlled device 200 are realized in a UPnP environment, the network 300 is a UPnP network, and it is obvious to one of ordinary skill in the art that the UPnP network complies with a standard TCP/IP based communication protocol.

Under the UPnP environment, the network 300 may include a dynamic host configuration protocol (DHCP) server, and the control point 100 and the controlled devices 200 may be assigned with IP addresses via the DHCP server when they are initially connected to the network 300. Here, the control point 100 and the controlled devices 200 assigned with IP addresses are all DHCP clients. When each device is assigned with an address via an address assignment process, a discovery process of discovering a device to be controlled is required. The control point 100 may search for the controlled devices 200 by using a protocol called a simple service discovery protocol (SSDP).

Such discovery process can be performed via two methods.

In a first method, the control point 100 searches for the controlled devices 200 connected to the network 300, and as a result, can discover the controlled devices 200. It is well known to one of ordinary skill in the art that a search message for searching for the controlled devices 200 may be an M-search message defined in the UPnP forum. The M-search message is multicasted by the control point 100 to the several controlled devices 200 connected to the network 300. Since the M-search message includes an address of a sender, i.e. the control point 100, the controlled devices 200, upon receiving the M-search message, unicast a response message to the control point 100 by referring to such address. Accordingly, the controlled devices 200 can be recognized by the control point 100.

In a second method, when the controlled devices 200 are connected to the network 300, the controlled devices 200 advertise their availability to the network 300, and as a result, the control point 100 discovers the controlled devices 200. A search message for searching for the controlled devices 200 may be an advertisement message defined in the UPnP forum. The advertisement message is multicasted to the network 300 by one controlled device of the controlled devices 200 so as to advertise its existence, in detail, availability of itself and its service. The advertisement message also includes an address of a sender, i.e. the one controlled device of the controlled devices 200, and thus the control point 100, upon receiving the advertisement message, can discover the one controlled device of the controlled devices 200 by referring to the address.

FIG. 2 is a diagram illustrating a problematic situation that is to be solved by exemplary embodiments of the present invention. One control point 100 and two controlled devices 210 and 220 are illustrated in FIG. 2. The control point 100 includes certain contents having a size of 500 Mbyte, and searches for a media server to upload the contents. Here, the controlled devices 210 and 220 operate as media servers, and respectively have disk sizes of 100 Mbyte and 1 Gbyte. The problematic situation will now be described sequentially.

In operation 251, the control point 100 searches for the controlled devices 210 and 220. A plurality of controlled devices 210 and 220 exists in a network, and so the M-search message described above may be used as a search message to search for the controlled devices 210 and 220. The controlled devices 210 and 220 transmit a response message about their existence or addresses to the control point 100 regarding the search message. Accordingly, the control point 100 discovers the controlled devices 210 and 220.

Assuming that the control point 100 selects the controlled device 210 to upload the contents in operation 252, the control point 100 tries to upload the contents having the size of 500 Mbytes to the controlled device 210.

Since the controlled device 210 has a smaller disk size than the contents size (500 Mbyte), the uploading of the contents fails. Accordingly, an upload failure message is transmitted to the control point 100 based on an insufficient disk space in operation 253.

In operation 254, the control point 100 uploads the contents to the controlled device 220 that was discovered in operation 251 with the controlled device 210.

Since the controlled device 220 has a larger disk size than the contents size (500 Mbyte), the uploading of the contents succeeds. Accordingly, an upload success message is transmitted to the control point 100 from the controlled device 220 in operation 255.

As described above, when the control point 100 searches for the controlled devices 210 and 220 in operation 251, the control point 100 does not consider an operation to be performed, for example, uploading of contents, but only searches for existence or address of the controlled devices 210 and 220. Accordingly, even though the controlled device 210 has insufficient disk space, the contents are attempted to be uploaded in operation 252. As a result, unnecessary operations 252 and 253 are performed, which cause unnecessary network traffic.

Accordingly, so as to solve such a problematic situation, resource information of a controlled device is provided during the discovery process in the following exemplary embodiments. Resource related problems, such as compatibility of device and service, the present condition of an available resource, etc., that may occur while a control point controls the controlled device can be pre-recognized, and thus trial and error and unnecessary waste of resources can be prevented.

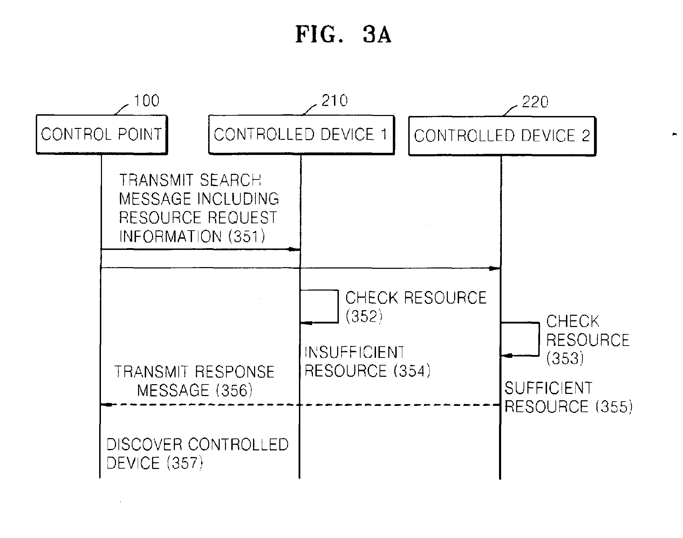

FIG. 3A is a diagram for describing a method of discovering a UPnP device by using a search message including resource request information according to an exemplary embodiment of the present invention. The method is performed under the same environment as FIG. 2.

In operation 351, the control point 100 transmits a search message including resource request information to a network. Here, the resource request information includes a resource demand required in controlling controlled devices after discovering the controlled devices. For example, the resource request information may include a disk space required to upload certain contents to a controlled device, a CPU processing capacity required to execute the contents in the controlled device, a memory size, etc. In other words, the resource request information may include a resource type and a resource value required for the controlled device to perform a certain operation. The search message may be an M-search message so as to search for the plurality of controlled devices 210 and 220 in a UPnP network, and may be multicasted to the UPnP network. Also, the M-search message may be transmitted by using an SSDP of a UPnP.

In operations 352 and 353, the controlled devices 210 and 220 check their own resources. The controlled devices 210 and 220 include their own resource information, and such resource information may be stored in a form of description of a UPnP device, or may be extracted in real time as demanded. In operations 352 and 353, the controlled devices 210 and 220 each receive the search message including the resource request information.

In operations 354 and 355, the controlled devices 210 and 220 extract the resource request information from the search message, and compare the resource request information with the resource information. Here, the resource information includes a resource demand of a device that is required to be controlled by the control point 100. Accordingly, the controlled devices 210 and 220 determine whether they have sufficient resources regarding the resource request information. As assumed above, the controlled device 210 does not have a resource that satisfies a resource demand (for example, contents upload), and thus a determination result of an insufficient resource is output. Meanwhile, the controlled device 220 has a resource that satisfies the resource demand, and thus a determination result of a sufficient and satisfactory resource is output.

In operation 356, a response message to the search message of operation 351 is selectively transmitted according to the results of operations 354 and 355. In other words, only the controlled device 220 that satisfies the resource demand transmits the response message. Here, if the search message of operation 351 includes an address of the control point 100, the response message may be unicasted to the control point 100 by referring to the address.

In operation 357, the control point 10 discovers the controlled device 220 corresponding with the resource request information based on the received response message.

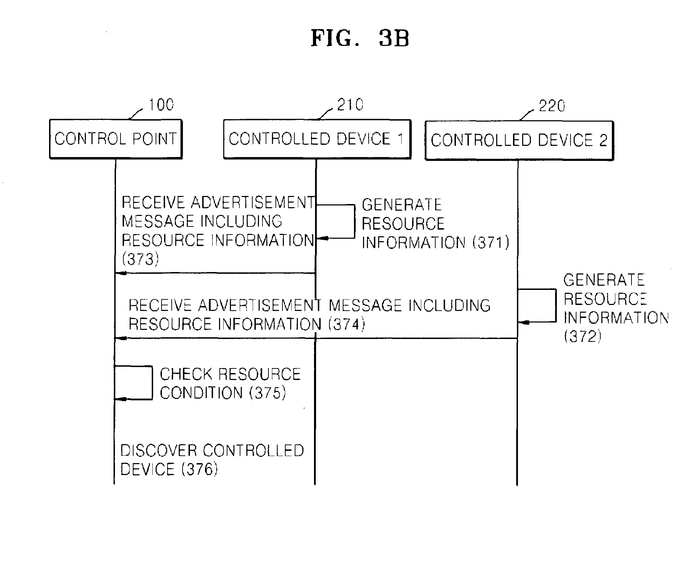

FIG. 3B is a diagram for describing a method of discovering a UPnP device by using an advertisement message including resource information according to an exemplary embodiment of the present invention. The method is performed in the same environment as FIGS. 2 and 3A described above. Unlike FIG. 3A, controlled devices 210 and 220 transmit an advertisement message, which advertises availability to a control point 100, so as to discover a UPnP device in FIG. 3B.

In operations 371 and 372, the controlled devices 210 and 220 respectively generate their own available resource information. Such available resource information may be stored in a form of description of a UPnP device, or may be extracted in real time as demanded.

In operations 373 and 374, the controlled devices 210 and 220 each transmit an advertisement message including the generated resource information to a UPnP network. Here, since an address of the control point 100 is unknown, the advertisement message may be multicasted to the UPnP network. Also, the advertisement message may be transmitted by using an SSDP of a UPnP.

In operation 375, the control point 100 receives at least one advertisement message including the resource information of the controlled devices 210 and 220 from the UPnP network. Here, each advertisement message corresponds to the controlled devices 210 and 220. Then, the resource information of the corresponding controlled device 210 or 220 is extracted from the received advertisement message, and a controlled device that is to be discovered by the control point 100 is searched for based on the extracted resource information. In other words, it is determined whether the controlled device 210 or 220 corresponding to the advertisement message is a UPnP device that is to be discovered by the control point 100. For example, it is determined whether the corresponding controlled device 210 or 220 has a sufficient disk size that can store contents to be uploaded by the control point 100, and has sufficient CPU capacity to execute multimedia contents that is to be executed by the control point 100.

In operation 376, the control point 100 discovers a controlled device that satisfies a resources condition according to the result of determination above.

In FIGS. 3A and 3B, two exemplary embodiments of discovering a UPnP device by using a search message or an advertisement message including resource information have been described. Also according to the above exemplary embodiments, the search message or the advertisement message includes resource request information required by a control point, and thus available resource information can be obtained during a discovery process. As a result, trial and error that occurs while searching for and controlling a UPnP device can be avoided, and unnecessary waste of resources, such as network traffic, can be prevented. Accordingly, efficiency of a communication protocol is improved.

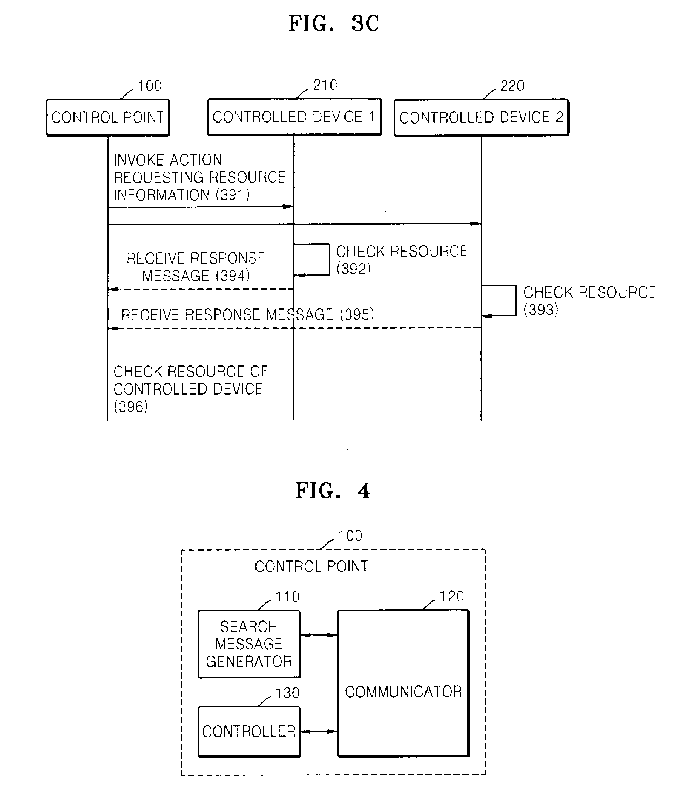

FIG. 3C is a diagram for describing a method of checking a resource of a UPnP device by invoking an action for requesting resource information according to an exemplary embodiment of the present invention. Unlike FIGS. 3A and 3B, controlled devices 210 and 220 are not discovered, but a control point 100 obtains resource information of the controlled device 210 and 220 during a control process in FIG. 3C.

In operation 391, the control point 100 invokes an action for requesting resource information to the controlled devices 210 and 220. Such action is operated in the controlled devices 210 and 220, and the control point 100 can execute a resource checking action of the controlled devices 210 and 220 by simply transmitting the name and input parameter of the resource checking action. For example, when an action called "GetResourceInfo()" for checking a resource exists in the controlled devices 210 and 220, the control point 100 transmits a resource type as an input parameter so as to execute the action in the form of "GetResourceInfo(Resource_Type)". Here, the resource type may assign a certain resource or all resources of the controlled devices 210 and 220. In order to assign all resources, a wild card notation, such as "*" (asterisk), or a notation, such as "ALL", may be used.

In operations 392 and 393, the controlled devices 210 and 220 check their own resources according to the invoked action, and then in operation 394 and 395, a response message is transmitted to the control point 100. Since an address of the control point 100 is known by invoking the action in operation 391, the response message may be unicasted to a UPnP network by referring to the address of the control point 100.

In operation 396, the control point 100 can check required resource information from the response message received from the controlled devices 210 and 220.

According to an exemplary embodiment of the present invention, the latest resource information of a UPnP device may be obtained during a control process by a control point invoking an action for requesting the resource information to the UPnP device even after a discover process.

FIG. 4 is a block diagram illustrating the control point 100 for discovering a UPnP device according to an exemplary embodiment of the present invention. The control point 100 may include a search message generator 110, a communicator 120, and a controller 130, but the control point 100 may include other elements which are not shown.

The search message generator 110 generates a search message including resource request information that is to be controlled by the control point 100. In order to search for unknown controlled devices connected to a UPnP network, the search message generator 110 may generate an M-search message including the resource request information. The search message generator 110 may be realized in a miniaturized processor or a network controller, and require process capacity to generate and process a message suitable to a control request from a main processor (not shown) of the control point (100).

The communicator 120 is a means to communicate with the UPnP network, and transmits the search message, receives a response message regarding the search message or an advertisement message of a controlled device, or invokes an action for requesting a resource to a controlled device. The UPnP network uses a TCP/IP based communication protocol, and thus the communicator 120 should be able to handle a conventional TCP/IP communication. Also, the communicator 120 may use general communication protocols of a UPnP. For example, the communicator 120 may use an SSDP for discovery, a generic event notification architecture (GENA) to execute an event, or a simple object access protocol (SOAP) to transmit a control message. The communicator 120 may be realized as a physical apparatus, such as a conventional network interface card (NIC).

The controller 130 is a means to control the control process after the control point 100 discovers the controlled device. In detail, the communicator 130 transmits the search message through the communicator 120, or discovers a control device corresponding to the resource request information based on the received response message. Also, the controller 130 discovers a control device to be discovered by the control point 100 by extracting resource information included in the received advertisement message. The controller 130 may be realized as a CPU of the control point 100 or as a part of operating means, such as a logic circuit (not shown).

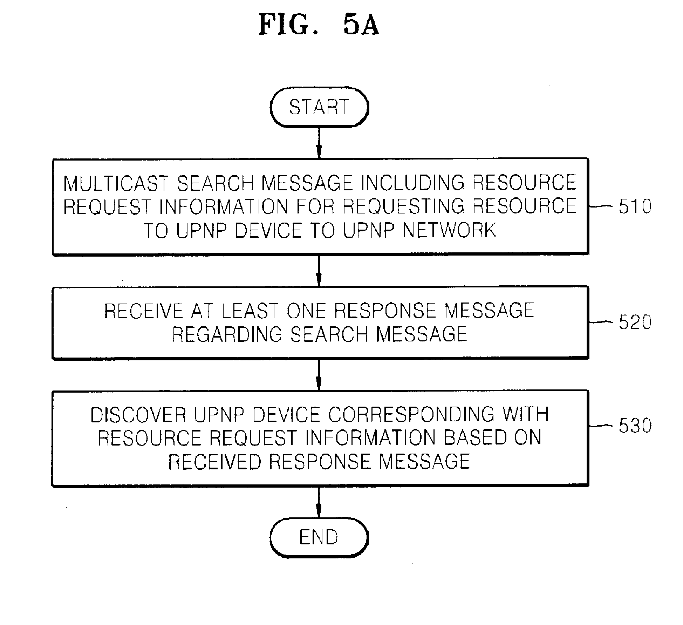

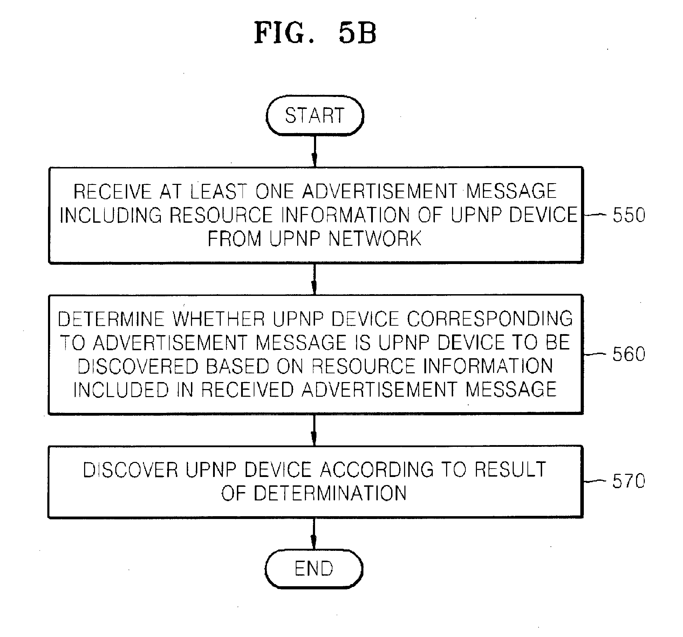

Operations of each element of the control point 100 will now be described with reference to FIGS. 5A and 5B.

FIG. 5A is a flowchart illustrating processes of discovering a UPnP device, i.e. a controlled device, by using a search message including resource request information according to an exemplary embodiment of the present invention.

In operation 510, the search message including the resource request information of the UPnP device is multicasted to a UPnP network. In operation 520, at least one response message regarding the search message multicasted in operation 510 is received. Operations 510 and 520 may be performed by the communicator 120 of FIG. 4.

In operation 530, a UPnP device corresponding with the resource request information is discovered based on the response message received in operation 520. Operation 530 may be performed by the controller 130 of FIG. 4.

FIG. 5B is a flowchart illustrating a process of discovering a UPnP device by using an advertisement message including resource information according to an exemplary embodiment of the present invention.

In operation 550, at least one advertisement message including resource information of a UPnP device is received from a UPnP network. Operation 550 may be performed by the communicator 120 of FIG. 4.

In operation 560, it is determined whether a UPnP device corresponding to the advertisement message is a UPnP device to be discovered based on the resource information included in the advertisement message received in operation 550. In operation 570, a UPnP device suitable to be discovered by a control point is discovered according to the result of operation 560. Operations 560 and 570 may be performed by the controller 130 of FIG. 4.

The apparatus for discovering a UPnP device is described above with reference to FIGS. 4, 5A, and 5B. Hereinafter, an apparatus for performing a discovery process in a UPnP device corresponding to the apparatus for discovering the UPnP device will be described.

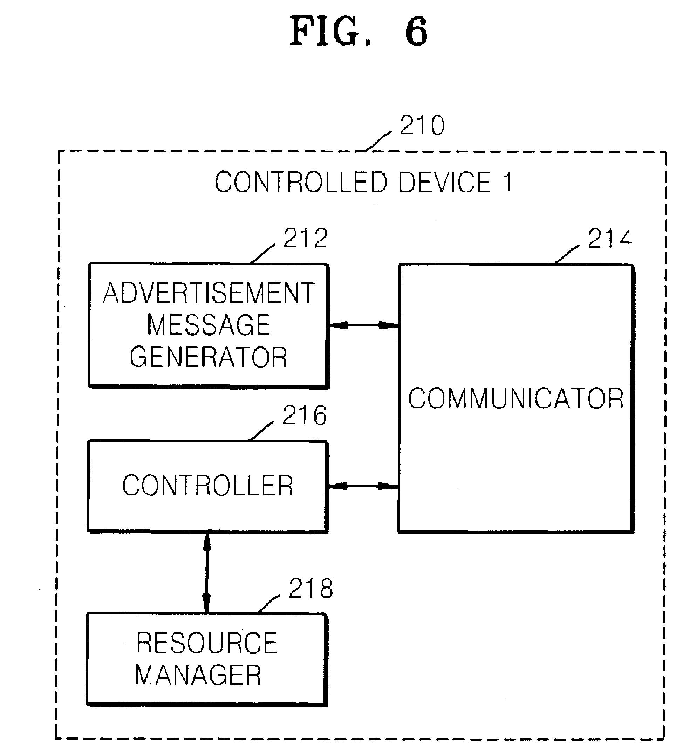

FIG. 6 is a block diagram illustrating a controlled device 1 210 for performing a discovery process in a UPnP device according to an exemplary embodiment of the present invention. The controlled device 1 210 may include an advertisement message 212, a communicator 214, a controller 216, and a resource manager 218, but the controlled device 1 210 may include other elements which are not shown. Furthermore, each one of the controlled devices 200 may have a similar structure as the controlled device 2 210 as shown in FIG. 6.

The advertisement message generator 212 generates an advertisement message including available resource information of the UPnP device. The advertisement message advertises availability of the UPnP device, and not only advertises the existence and availability of the UPnP device, but also includes the available resource information of the UPnP device.

The communicator 214 receives a search message including resource request information, selectively transmits a response message regarding the search message, transmits the advertisement message including resource information, or receives an action for requesting the resource information. Like the communicator 120 of FIG. 4, the communicator 214 of FIG. 6 also uses a conventional TCP/IP communication, and uses general communication protocols of an UPnP, such as SSDP, GENA, and SOAP. The communicator 214 is also realized in a physical apparatus, such as a conventional network interface (not shown).

The controller 216 is a means for the UPnP device to process a message received through the communicator 214, and in detail, may extract the resource request information from the search message received through the communicator 214 and compare the extracted resource request information with the resource information of the UPnP device. Also, the controller 216 may invoke an action of the controlled device according to a request of the control point 100. The controller 216 may also be realized as a CPU of the UPnP device or as a part of an operating means, such as a logic circuit (not shown).

The resource manager 218 manages the resource information of the UPnP device. The managed resource information is provided to the controller 216 so as to be compared with the resource request information, or is included in the advertisement message so as to be transmitted through the communicator 214. The resource manager 218 may include hardware, such as a controller attached to each resource, and software, such as data for managing the resource information.

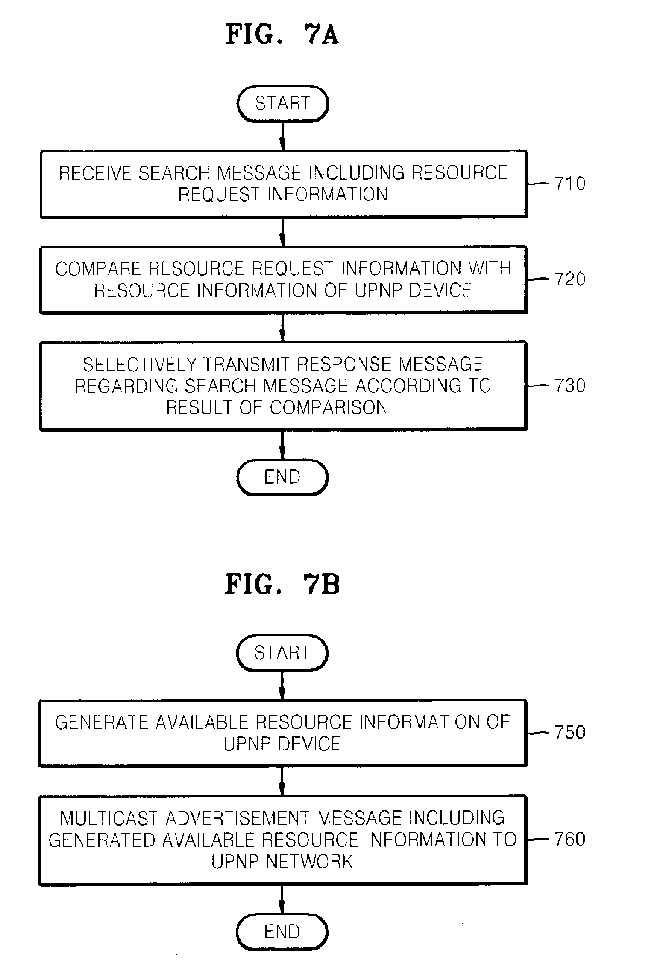

Operations of each element of the apparatus 200 will now be described with reference to FIGS. 7A and 7B.

FIG. 7A is a flowchart illustrating a method of processing a search message received in a UPnP device according to an exemplary embodiment of the present invention.

In operation 710, a search message including resource requesting information is received. Operation 710 may be performed by the communicator 214 of FIG. 6.

In operation 720, the resource request information included in the search message received in operation 710 is extracted and compared with resource information of the UPnP device. Operation 720 is performed by the controller 216 of FIG. 6.

In operation 730, a response message regarding the search message is selectively transmitted according to the result of comparison in operation 720. In detail, when the UPnP device corresponds with the resource request information, the response message is unicasted to a control point by referring to source information, i.e. an address of the control point, included in the search message.

FIG. 7B is a flowchart illustrating a method of transmitting an advertisement message including resource information from a UPnP device according to an exemplary embodiment of the present invention.

In operation 750, available resource information of the UPnP device is generated. Operation 750 may be performed by the resource manager 218 of FIG. 6.

In operation 760, an advertisement message including the available resource information generated in operation 750 is transmitted to a UPnP network. The advertisement message may be generated by the advertisement message generator 212 of FIG. 6, and such advertisement message may be multicasted to the UPnP network through the communicator 214 of FIG. 6.

The exemplary embodiments of the control point and the controlled devices have been described with reference to FIGS. 4 through 7B. Accordingly, available resource information can be obtained in a discovery process, and thus trial and error that may occur while searching for and controlling UPnP devices in a discovery process of an UPnP device may be avoided, and unnecessary waste of resources, such as network traffic, can be prevented. Accordingly, a communication protocol may be improved.

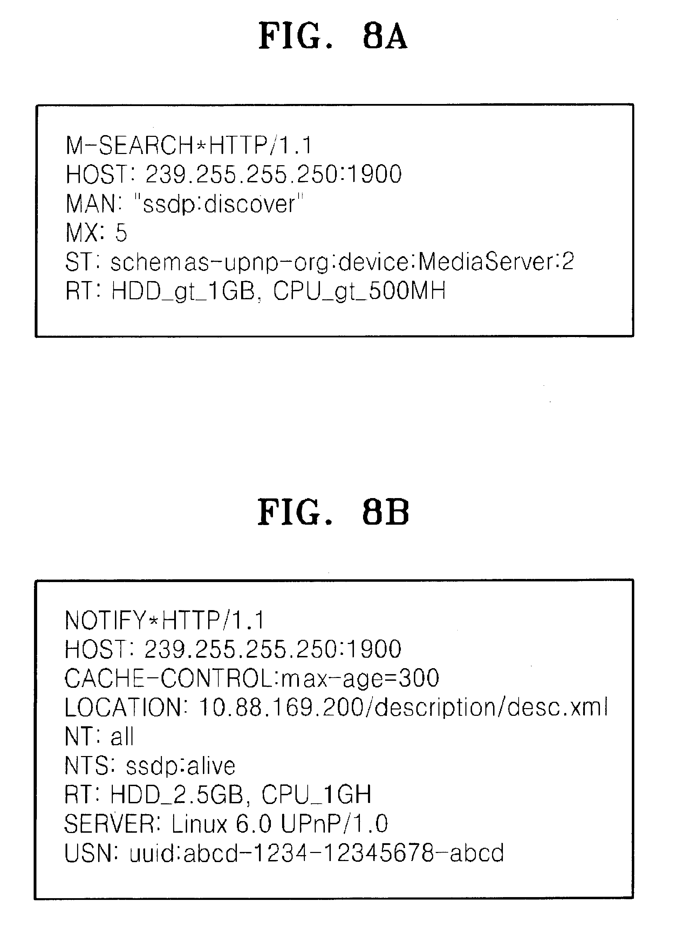

FIG. 8A is a diagram illustrating a search message including resource request information according to an exemplary embodiment of the present invention. A part of an M-search message is illustrated in FIG. 8A. Referring to FIG. 8A, "RT: HDD_gt_1GB, CPU_gt_500MH" denotes resource request information that is to be discovered by a control point, and requires at least 1 Gbyte hard disk space and at least 500 MHz CPU processing capacity. The resource request information uses a tag called "RT" in order to show a resource type. It can be seen that the resource request information includes a resource type and a resource value required to perform a certain operation by a controlled device.

FIG. 8B is a diagram illustrating an advertisement message including resource information according to an exemplary embodiment of the present invention. A part of the advertisement message is illustrated in FIG. 8B. In FIG. 8B, "RT: HDD_2.5GB, CPU_1GH" denotes available resource information of a UPnP device. Through the advertisement message, it can be seen that the UPnP device has 2.5 Gbyte hard disk space and 1 GHz CPU processing capacity.

While generating the search message and the advertisement message of FIGS. 8A and 8B, an expressing method or configuration of a tag showing the resource type may vary without departing from the scope of the invention as defined by the appended claims.

According to exemplary embodiments of the present invention, available resource information of UPnP devices connected to an UPnP network can be obtained in a discovery process, and as a result, trial and error while searching for and controlling the UPnP devices can be avoided and unnecessary waste of resources, such as network traffic, can be avoided. Accordingly, efficiency of a communication protocol is improved.

The invention can also be embodied as computer readable codes such as a program on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

The invention can also be embodied as a program embodied on carrier waves (such as data transmission through the Internet).

While this invention has been particularly shown and described with reference to exemplary embodiments thereof, it will be understood by those skilled in the art that various changes in form and details may be made therein without departing from the scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method of discovering a device with a variable resource complying with a predetermined standard, the method comprising:
multicasting (351, 510) a search message including resource request information, which requests the variable resource of the device, to a network complying with the predetermined standard;
receiving (520) at least one response message regarding the search message; and
discovering (530) the device corresponding with the resource request information based on the received response message;
wherein the resource request information comprises a resource type and a resource value required for the device to perform a predetermined operation;
wherein the at least one response message is transmitted (356, 730) by the device according to a result of a comparison of the required resource value of the resource request information with a current resource value of the variable resource of the device; and
wherein the current resource value of the variable resource of the device is determined (352, 353) by the device in real time upon reception of the search message.

2. The method of claim 1, wherein the predetermined standard is a Universal Plug and Play, UPnP, and the search message is an M-search message complying with UPnP.

3. A computer readable recording medium having recorded thereon a program for executing all the steps of the method of claim 1.

4. A method for a device complying with a predetermined standard to perform a discovery process, the method comprising:
receiving (710) a search message including resource request information, which requests a variable resource of the device;
wherein the resource request information comprises a resource type and a resource value required for the device to perform a predetermined operation;
comparing (720) the required resource value of the resource request information with a current resource value of the variable resource of the device; and
selectively transmitting (356, 730) a response message regarding the search message according to a result of the comparison;
wherein the current resource value of the variable resource of the device is determined (352, 353) by the device in real time upon reception of the search message.

5. The method of claim 4, wherein the predetermined standard is a Universal Plug and Play, UPnP, and the search message is an M-search message complying with the predetermined standard.

6. The method of claim 4, wherein the selectively transmitting (356, 730) the response message comprises unicasting the response message by referring to source information included in the search message, when the device corresponds with the resource request information.

7. A computer readable recording medium having recorded thereon a program for executing all the steps of the method of claim 4.

## Patentansprüche

1. Verfahren zum Auffinden einer Vorrichtung mit einer variablen Ressource, die einem vorgegebenen Standard entspricht, wobei das Verfahren umfasst:
Durchführen von Multicast (351, 510) einer Such-Nachricht, die Ressourcenanforderungs-Informationen enthält und die die variable Ressource der Vorrichtung anfordert, zu einem Netzwerk, das dem vorgegebenen Standard entspricht;
Empfangen (520) wenigstens einer Antwort-Nachricht bezüglich der Such-Nachricht; und
Auffinden (530) der Vorrichtung, die mit den Ressourcenanforderungs-Informationen korrespondiert, auf Basis der empfangenen Antwort-Nachricht;
wobei die Ressourcenanforderungs-Informationen einen Ressourcen-Typ und einen Ressourcen-Wert umfassen, die für die Vorrichtung zum Durchführen einer vorgegebenen Operation erforderlich sind;
die wenigstens eine Antwort-Nachricht durch die Vorrichtung entsprechend einem Ergebnis eines Vergleichs des erforderlichen Ressourcen-Wertes der Ressourcenanforderungs-Informationen mit einem aktuellen Ressourcen-Wert der variablen Ressource der Vorrichtung gesendet wird (356, 730); und
der aktuelle Ressourcen-Wert der variablen Ressource der Vorrichtung beim Empfang der Such-Nachricht durch die Vorrichtung in Echtzeit bestimmt wird (352, 353).

2. Verfahren nach Anspruch 1, wobei der vorgegebene Standard ein Universal-Plug-and Play-Standard (UPnP) ist und die Such-Nachricht eine M-Such-Nachricht ist, die UPnP entspricht.

3. Computerlesbares Aufzeichnungsmedium, auf dem ein Programm zum Ausführen aller Schritte des Verfahrens nach Anspruch 1 aufgezeichnet ist.

4. Verfahren für eine Vorrichtung, die einem vorgegebenen Standard entspricht, zum Durchführen eines Auffindungs-Prozesses, wobei das Verfahren umfasst:
Empfangen (710) einer Such-Nachricht, die Ressourcenanforderungs-Informationen enthält und die eine variable Ressource der Vorrichtung anfordert;
wobei die Ressourcenanforderungs-Informationen einen Ressourcen-Typ und einen Ressourcen-Wert umfassen, die für die Vorrichtung zum Durchführen einer vorgegebenen Operation erforderlich sind;
Vergleichen (720) des erforderlichen Ressourcen-Wertes der Ressourcenanforderungs-Informationen mit einem aktuellen Ressourcen-Wert der variablen Ressource der Vorrichtung; und
selektives Senden (356, 730) einer Antwort-Nachricht bezüglich der Such-Nachricht entsprechend einem Ergebnis des Vergleichs;
wobei der aktuelle Ressourcen-Wert der variablen Ressource der Vorrichtung beim Empfang der Such-Nachricht durch die Vorrichtung in Echtzeit bestimmt wird (352, 353).

5. Verfahren nach Anspruch 4, wobei der vorgegebene Standard ein Universal-Plug-and Play-Standard (UPnP) ist und die Such-Nachricht eine M-Such-Nachricht ist, die dem vorgegebenen Standard entspricht.

6. Verfahren nach Anspruch 4, wobei das selektive Senden (356, 730) der Antwort-Nachricht Durchführen von Unicast der Antwort-Nachricht unter Bezugnahme auf in der Such-Nachricht enthaltene Ursprungsinformationen umfasst, wenn die Vorrichtung mit den Ressourcenanforderungs-Informationen korrespondiert.

7. Computerlesbares Aufzeichnungsmedium, auf dem ein Programm zum Ausführen aller Schritte des Verfahrens nach Anspruch 4 aufgezeichnet ist.

## Revendications

1. Procédé de découverte d'un dispositif avec une ressource variable conforme à une norme prédéterminée, le procédé comprenant :
la multidiffusion (351, 510) d'un message de recherche comprenant des informations de demande de ressource, demandant la ressource variable du dispositif, vers un réseau conforme à la norme prédéterminée ;
la réception (520) d'au moins un message de réponse concernant le message de recherche ; et
la découverte (530) du dispositif correspondant aux informations de demande de ressource sur la base du message de réponse reçu ;
dans lequel les informations de demande de ressource comprennent un type de ressource et une valeur de ressource requise pour le dispositif pour effectuer une opération prédéterminée ;
dans lequel ledit au moins un message de réponse est transmis (356, 730) par le dispositif en fonction d'un résultat d'une comparaison de la valeur de ressource requise des informations de demande de ressource avec une valeur de ressource actuelle de la ressource variable du dispositif ; et
dans lequel la valeur de ressource actuelle de la ressource variable du dispositif est déterminée (352, 353) par le dispositif en temps réel lors de la réception du message de recherche.

2. Procédé selon la revendication 1, dans lequel la norme prédéterminée est une norme Universal Plug and Play, soit UPnP, et le message de recherche est un message M-search conforme avec l'UPnP.

3. Support d'enregistrement lisible par ordinateur sur lequel est enregistré un programme pour exécuter toutes les étapes du procédé selon la revendication 1.

4. Procédé pour un dispositif conforme à une norme prédéterminée pour effectuer un processus de découverte, le procédé comprenant :
la réception (710) d'un message de recherche comprenant des informations de demande de ressource, demandant une ressource variable du dispositif ;
dans lequel les informations de demande de ressource comprennent un type de ressource et une valeur de ressource requise pour le dispositif pour effectuer une opération prédéterminée ;
la comparaison (720) de la valeur de ressource requise des informations de demande de ressource avec une valeur de ressource actuelle de la ressource variable du dispositif ; et
la transmission de manière sélective (356, 730) d'un message de réponse concernant le message de recherche en fonction d'un résultat de la comparaison ;
dans lequel la valeur de ressource actuelle de la ressource variable du dispositif est déterminée (352, 353) par le dispositif en temps réel lors de la réception du message de recherche.

5. Procédé selon la revendication 4, dans lequel la norme prédéterminée est une norme Universal Plug and Play, soit UPnP, et le message de recherche est un message M-search conforme à la norme prédéterminée.

6. Procédé selon la revendication 4, dans lequel la transmission de manière sélective (356, 730) du message de réponse comprend la diffusion individuelle du message de réponse par référence à des informations de source comprises dans le message de recherche, lorsque le dispositif correspond aux informations de demande de ressource.

7. Support d'enregistrement lisible par ordinateur sur lequel est enregistré un programme pour exécuter toutes les étapes du procédé selon la revendication 4.
